(19) Europäisches Patentamt
European Patent Office
Office européen des brevets

(11) **EP 1 752 714 A1**

(12) **EUROPEAN PATENT APPLICATION**
published in accordance with Art. 158(3) EPC

(43) Date of publication:
**14.02.2007 Bulletin 2007/07**

(51) Int Cl.:
*F24F 1/00* (2006.01)    *F24F 1/02* (2006.01)
*F24F 6/00* (2006.01)

(21) Application number: **05728805.2**

(22) Date of filing: **05.04.2005**

(86) International application number:
**PCT/JP2005/006651**

(87) International publication number:
**WO 2005/100866 (27.10.2005 Gazette 2005/43)**

(84) Designated Contracting States:
**AT BE BG CH CY CZ DE DK EE ES FI FR GB GR HU IE IS IT LI LT LU MC NL PL PT RO SE SI SK TR**

(30) Priority: **15.04.2004 JP 2004120845**

(71) Applicant: **DAIKIN INDUSTRIES, LTD.**
**Osaka-shi, Osaka 530-8323 (JP)**

(72) Inventors:
• **TAIRA, Shigeharu,**
**c/o DAIKIN INDUSTRIES, LTD**
**Shiga 5258526 (JP)**

• **KURODA, Tarou,**
**c/o DAIKIN INDUSTRIES, LTD.**
**Shiga 5258526 (JP)**
• **OKAMOTO, Yoshio,**
**c/o DAIKIN INDUSTRIES, LTD.**
**Shiga 52558526 (JP)**

(74) Representative: **HOFFMANN EITLE**
**Patent- und Rechtsanwälte**
**Arabellastrasse 4**
**81925 München (DE)**

(54) **AIR CONDITIONER**

(57)     It is an object of the present invention to provide an air conditioner that can decompose and remove bacteria, viruses and the like, which are sources of odor, with greater efficiency than has conventionally been the case. An air conditioner (1, 301) comprises a resin part (24, 251, 252, 253, 307) and an apatite that includes a photocatalytic function. The resin part configures an air distribution path. The apatite that includes a photocatalytic function is disposed on at least part of the resin part.

*Fig. 3*

**Description**

**TECHNICAL FIELD**

The present invention relates to an air conditioner for conditioning air.

**BACKGROUND ART**

Conventionally, there has been technology where an optical semiconductor catalyst layer is disposed on the surfaces of an air inlet, an air filter, a heat exchanger, a scroll, a fan, an air outlet and the like of an indoor unit of an air conditioner to decompose and remove bacteria, viruses and the like, which are sources of odor, inside the indoor unit (e.g., see Patent Document 1).
<Patent Document 1> JP-ANo. 9-196399

**DISCLOSURE OF THE INVENTION**

<Problem that the Invention is to Solve>

It is an object of the present invention to provide an air conditioner that can decompose and remove bacteria, viruses and the like, which are sources of odor, with greater efficiency than has conventionally been the case.

<Means for Solving the Problem>

An air conditioner pertaining to a first invention comprises a resin part and an apatite that includes a photocatalytic function. The resin part configures an air distribution path. It will be noted that, in the "air conditioner" referred to here, an air conditioner, a dehumidifier, a humidifier, an oxygen enrichment device, a total heat exchanger, and an air duct system and the like are included. Further, the air distribution path is a path for distributing air into a room. Further, the "resin part" referred to here is, for example, a scroll part, a flap, a humidified air supply hose, an oxygen-enriched air supply hose, an air supply pipe and an air discharge pipe of a total heat exchanger, an air duct and the like. Additionally, the apatite that includes a photocatalytic function is disposed on at least part of the resin part. It will be noted that the "apatite that includes a photocatalytic function" referred to here is, for example, an apatite where some of the calcium atoms in calcium hydroxyapatite have been substituted with titanium atoms by a method such as ion exchange. Further, the apatite that includes a photocatalytic function may be distributed in the resin part or coated on the resin surface.
Ordinarily, an optical semiconductor catalyst such as titanium dioxide has poor capability to actively trap bacteria, viruses and the like. In contrast, the apatite that includes a photocatalytic function powerfully adsorbs bacteria, viruses and the like such that it can inhibit or control their growth. Additionally, when the apatite is irradiated with light of a predetermined wavelength range such as ultraviolet light, those bacteria, viruses and the like are decomposed and removed.
Here, the apatite that includes a photocatalytic function is disposed on at least part of the resin part. For this reason, this air conditioner can decompose and remove bacteria, viruses and the like, which are sources of odor, with greater efficiency than an air conditioner that carries a conventional optical semiconductor catalyst.
An air conditioner pertaining to a second invention is the air conditioner pertaining to the first invention, further comprising an impeller. The impeller is a member for supplying the air into the room. The resin part is a scroll part. The scroll part causes a flow of the air generated as a result of the impeller rotating to converge.
Here, the resin part is a scroll part. For this reason, in this air conditioner, the scroll part can be kept clean.
An air conditioner pertaining to a third invention is the air conditioner pertaining to the first invention or the second invention, wherein the resin part is a flap. The flap adjusts the flow direction of the air into the room.
Here, the resin part is a flap. For this reason, in this air conditioner, the flap can be kept clean.
An air conditioner pertaining to a fourth invention is the air conditioner pertaining to any of the first invention to the third invention, further comprising a humidifying unit and an indoor unit. The humidifying unit humidifies the air. The indoor unit is disposed in the room. Additionally, the air distribution path is a humidified air distribution path. The humidified air distribution path is a distribution path for supplying, to the indoor unit, the air that has been humidified by the humidifying unit.
Here, the resin part configures a humidified air distribution path. In other words, the "resin part" referred to here is a humidifying hose, a humidifying duct and the like. For this reason, in this air conditioner, the humidifying hose, the humidifying duct and the like can be kept clean.
An air conditioner pertaining to a fifth invention comprises a resin part and an apatite that includes a photocatalytic function. The resin part is disposed in an air distribution path. The air distribution path is a path for distributing air into a room. Further, the "resin part" referred to here is, for example, a fan, a drain pan, configural parts of a humidifying unit and the like. Additionally, the apatite that includes a photocatalytic function is disposed on at least part of the resin part.

Ordinarily, an optical semiconductor catalyst such as titanium dioxide has poor capability to actively trap bacteria, viruses and the like. In contrast, the apatite that includes a photocatalytic function powerfully adsorbs bacteria, viruses and the like such that it can inhibit or control their growth. Additionally, when the apatite is irradiated with light of a predetermined wavelength range such as ultraviolet light, those bacteria, viruses and the like are decomposed and removed.

Here, the apatite that includes a photocatalytic function is disposed on at least part of the resin part. For this reason, this air conditioner can decompose and remove bacteria, viruses and the like, which are sources of odor, with greater efficiency than an air conditioner that carries a conventional optical semiconductor catalyst.

An air conditioner pertaining to a sixth invention is the air conditioner pertaining to the fifth invention, wherein the resin part is an impeller. It will be noted that the impeller is a member for supplying the air into the room.

Here, the resin part is an impeller. For this reason, in this air conditioner, the impeller can be kept clean.

An air conditioner pertaining to a seventh invention is the air conditioner pertaining to the fifth invention or the sixth invention, further comprising a cooling part. The cooling part is a member for cooling the air. It will be noted that the "cooling part" referred to here is a heat exchanger (evaporator) or the like. Additionally, the resin part is a drain pan. The drain pan receives water condensed by the cooling part.

Here, the resin part is a drain pan. For this reason, in this air conditioner, the drain pan can be kept clean.

An air conditioner pertaining to an eighth invention is the air conditioner pertaining to any of the fifth invention to the seventh invention, wherein the resin part is a humidifying unit. The humidifying unit humidifies the air.

Here, the resin part is a humidifying unit. For this reason, in this air conditioner, the humidifying unit can be kept clean.

An air conditioner pertaining to a ninth invention is the air conditioner pertaining to any of the first invention to the eighth invention, wherein the apatite that includes a photocatalytic function is distributed in the resin part.

Here, the apatite that includes a photocatalytic function is distributed in the resin part. For this reason, a resin part that includes a cleaning function can be manufactured hardly without changing the manufacturing method of the resin part. Further, an optical semiconductor catalyst such as titanium dioxide erodes resin when it is active, so that a special binder has been necessary when the optical semiconductor catalyst is distributed in the resin, but the apatite that includes a photocatalytic function hardly erodes resin when it is active despite the fact that it exhibits greater decomposing capability than titanium dioxide with respect to bacteria, viruses and the like. For this reason, a special binder is not necessary. Consequently, a resin part that includes a cleaning function can be manufactured at a lower cost.

An air conditioner pertaining to a tenth invention is the air conditioner pertaining to any of the first invention to the ninth invention, wherein the portion of the resin part where the apatite that includes a photocatalytic function is disposed is surface-roughened.

Here, the portion of the resin part where the apatite that includes a photocatalytic function is disposed is surface-roughened. For this reason, more of the apatite that includes a photocatalytic function can be disposed on the surface of the resin part. Consequently, this air conditioner can decompose and remove bacteria, viruses and the like, which are sources of odor, with even greater efficiency.

An air distribution path forming member pertaining to an eleventh invention is an air distribution path forming member that forms an air distribution path for distributing air into a room, wherein the air distribution path forming member is molded from resin. It will be noted that the "air distribution path forming member" referred to here is, for example, a humidified air supply hose, an oxygen-enriched air supply hose, an air supply pipe and an air discharge pipe of a total heat exchanger, an air duct and the like. Additionally, the air distribution path forming member comprises an apatite that includes a photocatalytic function. It will be noted that the apatite that includes a photocatalytic function is disposed so as to contact the air flowing in the air distribution path. Further, the "apatite that includes a photocatalytic function" referred to here is, for example, an apatite where some of the calcium atoms in calcium hydroxyapatite have been substituted with titanium atoms by a method such as ion exchange. Further, the apatite that includes a photocatalytic function may be distributed in the air distribution path forming member itself or coated on the inner surface of the air distribution path forming member.

Ordinarily, an optical semiconductor catalyst such as titanium dioxide has poor capability to actively trap bacteria, viruses and the like. In contrast, the apatite that includes a photocatalytic function powerfully adsorbs bacteria, viruses and the like such that it can inhibit or control their growth. Additionally, when the apatite is irradiated with light of a predetermined wavelength range such as ultraviolet light, those bacteria, viruses and the like are decomposed and removed.

Here, the air distribution path forming member is molded from resin. Additionally, the apatite that includes a photocatalytic function is disposed so as to contact the air flowing in the air distribution path. For this reason, this air distribution path forming member can decompose and remove bacteria, viruses and the like, which are sources of odor, with greater efficiency than an air distribution path forming member that carries a conventional optical semiconductor catalyst.

An air distribution path forming member pertaining to a twelfth invention is an air distribution path forming member that forms an air distribution path for distributing air into a room, the air distribution path forming member comprising a resin layer and an apatite that includes a photocatalytic function. The resin layer is disposed so as to cover at least part of the air distribution path. The apatite that includes a photocatalytic function is disposed on at least part of the resin layer.

Ordinarily, an optical semiconductor catalyst such as titanium dioxide has poor capability to actively trap bacteria, viruses and the like. In contrast, the apatite that includes a photocatalytic function powerfully adsorbs bacteria, viruses and the like such that it can inhibit or control their growth. Additionally, when the apatite is irradiated with light of a predetermined wavelength range such as ultraviolet light, those bacteria, viruses and the like are decomposed and removed.

Here, the resin layer is disposed so as to cover at least part of the air distribution path. Additionally, the apatite that includes a photocatalytic function is disposed on at least part of the resin layer. For this reason, this air distribution path forming member can decompose and remove bacteria, viruses and the like, which are sources of odor, with greater efficiency than an air distribution path forming member that carries a conventional optical semiconductor catalyst.

<Effects of the Invention>

The air conditioner pertaining to the first invention can decompose and remove bacteria, viruses and the like, which are sources of odor, with greater efficiency than an air conditioner that carries a conventional optical semiconductor catalyst.

In the air conditioner pertaining to the second invention, the scroll part can be kept clean.

In the air conditioner pertaining to the third invention, the flap can be kept clean.

In the air conditioner pertaining to the fourth invention, the humidifying hose and the humidifying duct can be kept clean.

The air conditioner pertaining to the fifth invention can decompose and remove bacteria, viruses and the like, which are sources of odor, with greater efficiency than an air conditioner that carries a conventional optical semiconductor catalyst.

In the air conditioner pertaining to the sixth invention, the impeller can be kept clean.

In the air conditioner pertaining to the seventh invention, the drain pan can be kept clean.

In the air conditioner pertaining to the eighth invention, the humidifying unit can be kept clean.

In the air conditioner pertaining to the ninth invention, a resin part that includes a cleaning function can be manufactured hardly without changing the manufacturing method of the resin part.

The air conditioner pertaining to the tenth invention can decompose and remove bacteria, viruses and the like, which are sources of odor, with even greater efficiency.

The air distribution path forming member pertaining to the eleventh invention can decompose and remove bacteria, viruses and the like, which are sources of odor, with greater efficiency than an air distribution path forming member that carries a conventional optical semiconductor catalyst.

The air distribution path forming member pertaining to the twelfth invention can decompose and remove bacteria, viruses and the like, which are sources of odor, with greater efficiency than an air distribution path forming member that carries a conventional optical semiconductor catalyst.

**BRIEF DESCRIPTION OF THE DRAWINGS**

FIG. 1 is an external view of an air conditioner pertaining to a first embodiment.
FIG. 2 is a diagram of a refrigerant system of the air conditioner pertaining to the first embodiment.
FIG. 3 is a side sectional view of an indoor unit pertaining to the first embodiment.
FIG. 4 is a perspective view showing part of the configuration of an indoor unit casing pertaining to the first embodiment.
FIG. 5 is an external view of an air conditioner pertaining to a second embodiment.
FIG. 6 is a diagram of a refrigerant system of the air conditioner pertaining to the second embodiment.
FIG. 7 is an exploded perspective view of an outdoor unit of the air conditioner pertaining to the second embodiment.
FIG. 8 is a comparative diagram of the photocatalytic activities of titanium dioxide and titanium apatite.
FIG. 9 is a comparative diagram of resin erosivity of titanium dioxide and titanium apatite.

<Description of the Reference Numerals>

| 1,301 | Air Conditioners |
|---|---|
| 21 | Cross Flow Fan |
| 24 | Scroll (Scroll Part) |
| 29 | Drain Pan |
| 251 | Inlet |
| 252 | Outlet |
| 253 | Flap |
| 304 | Humidified Air Supply and Discharge Unit (Humidifying Unit) |
| 307 | Air Supply and Discharge Pipe (Humidified Air Distribution Path) |

**BEST MODE FOR CARRYING OUT THE INVENTION**

<First Embodiment>

<Overall Configuration of Air Conditioner>

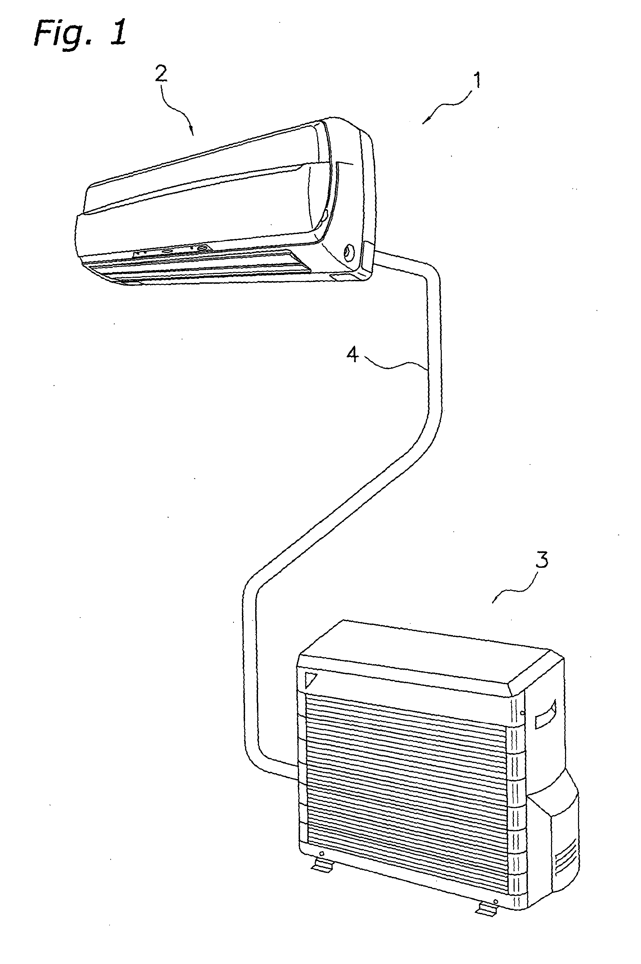

The exterior of an air conditioner 1 pertaining to a first embodiment of the present invention is shown in FIG. 1.

The air conditioner 1 is disposed with a wall-mounted type indoor unit 2, which is attached to the surface of a wall in a room, and an outdoor unit 3, which is disposed outside the room.

An indoor heat exchanger is housed inside the indoor unit 2, an outdoor heat exchanger is housed inside the outdoor unit 3, and the heat exchangers are connected by a refrigerant pipe 4 to configure a refrigerant circuit.

<Outline of the Configuration of the Refrigerant Circuit of the Air Conditioner>

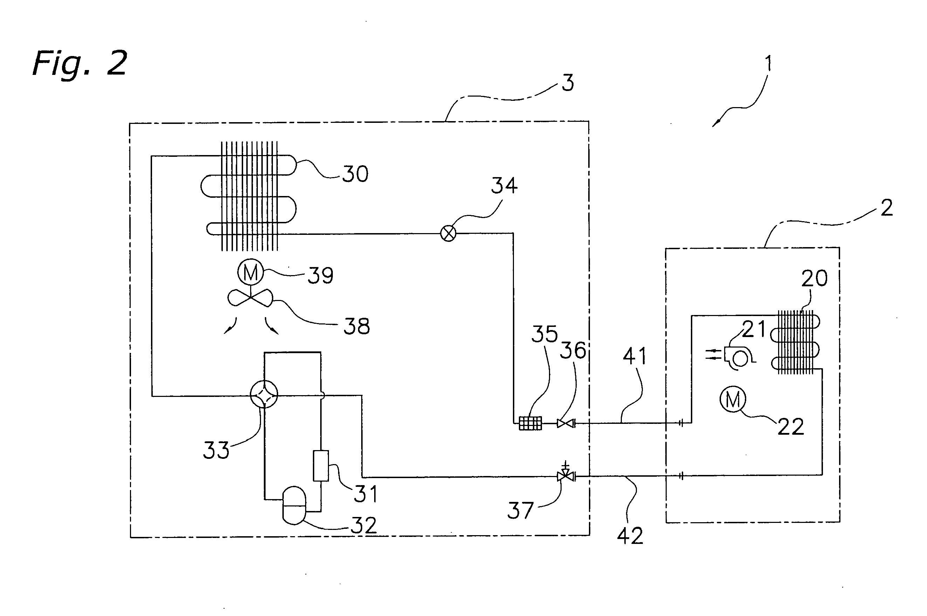

The configuration of the refrigerant circuit of the air conditioner 1 is shown in FIG. 2. The refrigerant circuit is mainly configured by an indoor heat exchanger 20, an accumulator 31, a compressor 32, a four-way switch valve 33, an outdoor heat exchanger 30, and an electrically powered expansion valve 34.

The indoor heat exchanger 20 disposed in the indoor unit 2 performs heat exchange with air coming into contact therewith. Further, a cross flow fan 21 for taking in room air, passing the room air through the indoor heat exchanger 20, and discharging, into the room, air after heat exchange has been performed is disposed in the indoor unit 2. The cross flow fin 21 is configured in a circular cylinder shape, with blades being disposed on its peripheral surface in its rotational axis direction, and creates an airflow in a direction intersecting its rotational axis. The cross flow fan 21 is driven to rotate by an indoor fan motor 22 disposed inside the indoor unit 2. The detailed configuration of the indoor unit 2 will be described later.

The compressor 32, the four-way switch valve 33 connected to the discharge side of the compressor 32, the accumulator 31 connected to the intake side of the compressor 32, the outdoor heat exchanger 30 connected to the four-way switch valve 33, and the electrically powered expansion valve 34 connected to the outdoor heat exchanger 30 are disposed in the outdoor unit 3. The electrically powered expansion valve 34 is connected to a pipe 41 via a filter 35 and a liquid shutoff valve 36, and is connected to one end of the indoor heat exchanger 20 via this pipe 41. Further, the four-way switch valve 33 is connected to a pipe 42 via a gas shutoff valve 37, and is connected to the other end of the indoor heat exchanger 20 via this pipe 42. The pipes 41 and 42 correspond to the refrigerant pipe 4 in FIG. 1. Further, a propeller fan 38 for discharging air after heat exchange in the outdoor heat exchanger 30 to the outside is disposed in the outdoor unit 3. The propeller fan 38 is driven to rotate by a fan motor 39.

<Configuration of the Indoor Unit>

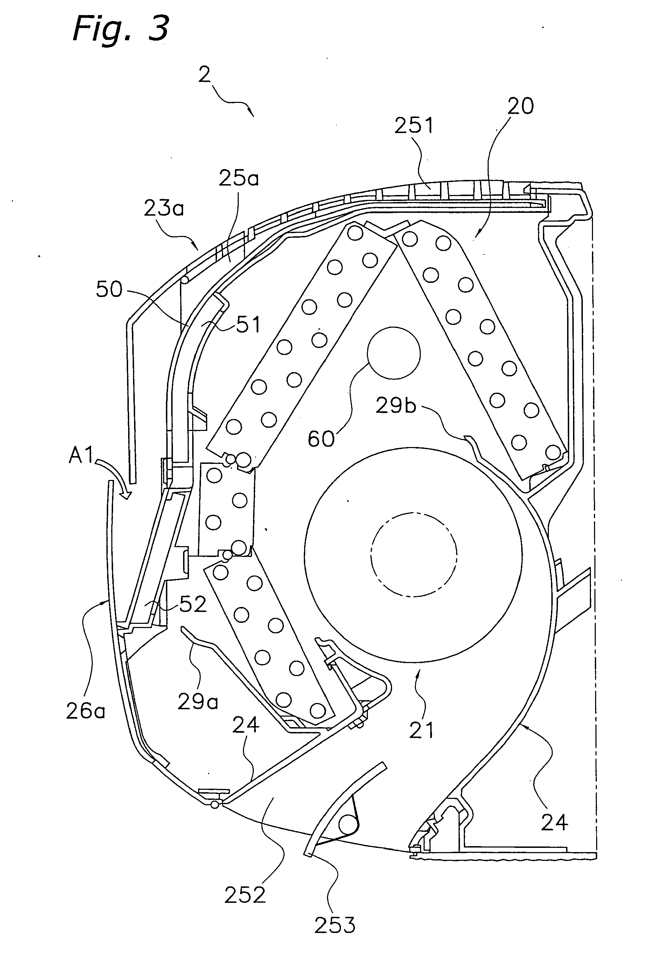

A side sectional view of the indoor unit 2 is shown in FIG. 3.

The indoor unit 2 is disposed with the aforementioned cross flow fan 21 and the indoor heat exchanger 20 and the like and an indoor unit casing 23 a that houses these.

The cross flow fan 21 is driven to rotate about a central axis by the indoor fan motor 22 to create an airflow where air is taken in from an inlet 251, passed through the indoor heat exchanger 20, and blown into the room from an outlet 252. The cross flow fan 21 is positioned in the substantial center of the indoor unit 2 when seen in side view.

The indoor heat exchanger 20 is disposed so as to surround the front, the top, and the top of the rear portion of the cross flow fan 21. Air taken in from the inlet 251 by the driving of the cross flow fan 21 passes toward the cross flow fan 21. Heat exchange is performed between the air and refrigerant passing through a heat exchange tube of the indoor heat exchanger 20. The indoor heat exchanger 20 has a substantially inverted "V" cross-sectional shape when seen in side view. It will be noted that drain pans 29a and 29b are disposed in the lower portion of the indoor heat exchanger 20. The drain pans 29a and 29b play a receiving role such that dew forming on the surface of the indoor heat exchanger 20 during cooling does not fall into the room.

(Configuration of the Indoor Unit Casing 23a)

The indoor unit casing 23a is mainly configured by a scroll 24, a front grill 25a, and a front panel 26a.

The scroll 24 configures the rear side of the indoor unit 2 and covers the rear of the indoor heat exchanger 20 and the cross flow fan 21.

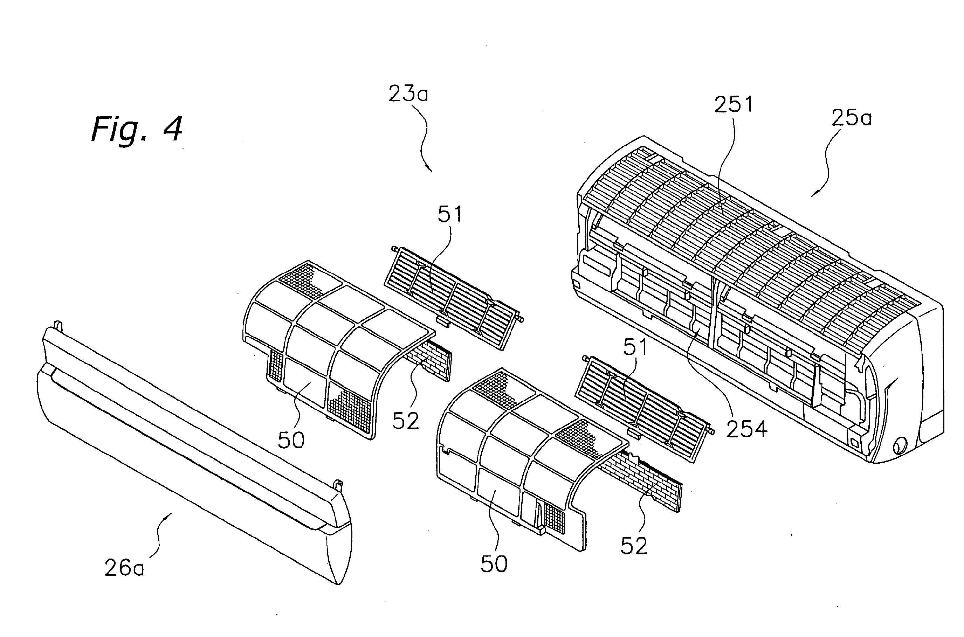

The front grill 25a is formed so as to cover the top, the sides, and the bottom of the indoor unit 2, and the front panel 26a is attached to the front portion of the front grill 25a (see FIG. 3 and FIG. 4). The inlet 251, which comprises plural slit-shaped openings, is disposed in the top of the front grill 25a. The inlet 251 is disposed across substantially the entire top of the front grill 25a. The outlet 252, which comprises an opening along the longitudinal direction of the indoor unit 2, is disposed in the front of the underside of the front grill 25a. Further, a horizontal flap 253, along which air blown into the room is guided, is disposed in the outlet 252. The horizontal flap 253 is disposed so as to freely rotate about an axis parallel to the longitudinal direction of the indoor unit 2. The horizontal flap 253 rotates by a flap motor (not shown) such that it can open and close the outlet 252.

The front panel 26a is disposed on the front of the indoor unit 2. The front panel 26a is formed separately from the front grill 25a and is attached so as to cover the front of the front grill 25a. The front side of the front grill 25a is configured by two surfaces that are divided into one above and one below by a step disposed horizontally, and each of the surfaces is formed substantially flatly and is a smooth surface in which there is no unevenness or openings such as holes or slits. Further, the step portion is a planar opening, and the room air is also taken in from this opening (see the white arrow A1 in FIG. 3).

As shown in FIG. 4, an opening 254 is disposed in the front of the front grill 25a. Various kinds of filters 50, 51 and 52 are disposed between the front of the front grill 25a and the front panel 26a, whereby the opening 254 is covered by the filters 50, 51 and 52. The filters 50, 51 and 52 are a pre-filter 50, an air purifying filter 51, and a photocatalytic filter 52.

The pre-filter 50 can remove dirt and dust from the passing air. The pre-filter 50 is disposed so as to cover the front and top of the front grill 25a. The portion of the pre-filter 50 positioned on the top of the front grill 25a is positioned just inside the top inlet 251.

The air purifying filter 51 is disposed on the front upper portion of the front grill 25a and at the inner side of the pre-filter 50. The air purifying filter 51 can remove fine dust, cigarette smoke, pollen and the like from the passing air more than the pre-filter 50.

The photocatalytic filter 52 is disposed on the front lower portion of the front grill 25a and can remove odorous components, poisonous gases, bacteria, viruses and the like from the passing air. The odorous components are, for example, formaldehyde, acetaldehyde, ammonia, and hydrogen sulfide, and are components that cause malodors arising from cigarettes, food scraps, and construction materials. The poisonous gases are poisonous components included in exhaust gases of cars and the like, such as $NO_X$ and $SO_X$. The photocatalytic filter 52 is formed in a sheet shape that has a honeycomb structure, and mainly includes titanium apatite. It will be noted that this titanium apatite is an apatite where some of the calcium atoms in calcium hydroxyapatite have been substituted with titanium atoms by a method such as ion exchange and the like. Additionally, this titanium apatite specifically adsorbs odorous components, poisonous gases, bacteria, viruses and the like. Moreover, this titanium apatite includes a photocatalytic function, exhibits powerful oxidizing power by light, and can decompose and detoxify odorous components, poisonous gases, bacteria, viruses and the like.

<Self-Cleaning Function of the Air Conditioner>

The cross flow fan 21, the front grill 25a (including the inlet 251, the outlet 252, the scroll 24, and the drain pans 29a and 29b), the front panel 26a, and the flap 253, which are members configuring the indoor unit 2 of the air conditioner 1, are resin molded bodies, and titanium apatite is distributed in the resin. It will be noted that the surfaces of the resin molded bodies 21, 25a, 26a, and 253 are substantially smooth. Further, some of the titanium apatite is exposed to the resin surface. Further, the indoor heat exchanger 20 is a metal body made of aluminium or the like, and titanium apatite is coated on its surface.

As mentioned above, the titanium apatite specifically adsorbs odorous components, poisonous gases, bacteria, viruses and the like. Additionally, these titanium apatites exhibit powerful oxidizing power and can decompose and detoxify odorous components, poisonous gases, bacteria, viruses and the like by outside light and an ultraviolet lamp 60 (see FIG. 3) disposed between the indoor heat exchanger 20 and the cross flow fan 21. It will be noted that the titanium apatite presents in the inlet 251, the outlet 252, and the outer surfaces of the scroll 24, the flap 253 and the front panel 26a, and is activated mainly by outside light.

<Performance of Titanium Apatite with Respect to Bacteria and Viruses>

The inactivation rates of viruses, bacteria, and toxins by titanium apatite are shown in Table 1.

<Table 1>

| Test Subject | | Inactivation Rate | Testing Organization and Registration Number |
|---|---|---|---|
| Influenza Virus | | greater than 99.99% | Japan Food Research Laboratories No. 203052102 |
| Test Bacteria | Escherichia coli (0-157) | greater than 99.99% | Japan Food Research Laboratories No. 203030567-001 |
| | Staphylococcus aureus | greater than 99.99% | Japan Food Research Laboratories No. 203030567-001 |
| | Cladosporium cladosporioides | greater than 99.99% | Japan Food Research Laboratories No. 203030567-001 |
| Toxin | Enterotoxin | greater than 99.99% | Japan Food Research Laboratories No. 203050715-001 |

It will be noted that these inactivation rates were measured at the foundation Japan Food Research Laboratories by the method described below.

1. Inactivation Rate of Influenza Virus

(1) Test Summary

An influenza virus suspension was delivered by drops into filters (about 30 mm × 30 mm) coated with titanium apatite, stored at room temperature under dark conditions (shielded from light) and bright conditions (irradiation with black light (distance between filter and black light: about 20 cm)), and the viral infectivity after 24 hours was measured.

(2) Calculation of Inactivation Rate

$$\text{Inactivation Rate} = 100 \times (1 - 10^B/10^A)$$

A: Viral infectivity immediately after inoculation
B: Viral infectivity after irradiation with light for 24 hours

(3) Test Method

A. Test Virus: influenza virus A (H1N1)
B. Cells Used: MDCK (NBL-2) cells ATCC CCL-34 strain (Dainippon Pharmaceutical Co., Ltd.)
C. Mediums Used
a) Cell Growth Medium
A medium obtained by adding 10% newborn calf serum to Eagle MEM (including 0.06 mg/ml kanamycin) was used.
b) Cell Maintenance Medium
A medium having the following composition was used.

| | |
|---|---|
| Eagle MEM | 1,000 mL |
| 10% NaHCO$_3$ | 24 to 44 mL |
| L-glutamine (30 g/L) | 9.8 mL |
| 100×MEM vitamin solution | 30 mL |
| 10% albumin | 20 mL |
| Trypsin (5 mg/mL) | 2 mL |

D. Preparation of Virus Suspension

a) Cell Culture
The cell growth medium was used to grow the MDCK cells in monolayer culture inside a tissue culture flask.
b) Virus Inoculation
After the cells were grown in monolayer culture, the cell growth medium was removed from the inside of the flask and the cells were inoculated-with the test virus. Next, the cell maintenance medium was added and the cells were incubated for 2 to 5 days inside a 37°C carbon dioxide incubator (CO$_2$ concentration: 5%).
c) Preparation of Virus Suspension
After the cells were incubated, an inverted phase contrast microscope was used to observe the shapes of the cells, and it was confirmed that morphological changes (cytopathogenic effect) occurred in 80% or more of the cells. Next, the culture fluid was centrifugally separated (3,000 r/min., for 10 minutes) and the obtained supernatant fluid was used for the virus suspension.

E. Preparation of Sample
The filter (about 30 mm × 30 mm) was air-dried for 1 hour after moist heat sterilization (121°C, for 15 minutes), placed in a plastic Petri dish, and irradiated with black light (black light blue, FL20S BL-B 20W, 2 in parallel) for 12 hours or more to obtain the sample.

F. Test Operation

0.2 mL of the virus suspension was delivered by drops to the samples. These were stored at room temperature under shielding from light and irradiation with black light (distance between filter and black light: about 20 cm). Further, polyethylene film was used as a comparative sample and tested in the same manner.

G. Washout of Virus

After being stored for 24 hours, the virus suspension in the specimen was washed out with 2 mL of the cell maintenance medium.

H. Measurement of Viral Infectivity

The cell growth medium was used to grow the MDCK cells in monolayer culture inside a tissue culture microplate (96 holes), and thereafter the cell growth medium was removed and 0.1 mL each of a cell maintenance medium was added. Next, 4 holes each were inoculated with washout fluid and 0.1 mL diluted fluid thereof, and the cells were incubated for 4 to 7 days inside a 37°C carbon oxide incubator ($CO_2$ concentration: 5%). After the cells were incubated, an inverted phase contrast microscope was used to observe whether or not there were morphological changes in the cells, and a 50% tissue culture infective dose ($TCID_{50}$) was calculated by the Reed-Muench method and converted to viral infectivity per 1 mL of the washout fluid.

2. Inactivation Rates of Escherichia coli (0-157), Staphylococcus aureus, and Cladosporium cladosporioides

(1) Test Summary

Microbial tests of filters were performed based on the Society of Industrial Antimicrobial Articles' test method "Industrial Antimicrobial Article Antimicrobial Effect Evaluation Test III (2001 Version): Light Irradiation Film Contact Method" (hereinafter referred to as the "light irradiation film contact method (SIAA 2001 version)").

The test was implemented as follows.

Bacteria liquids of Escherichia coli, Staphylococcus aureus, and Cladosporium cladosporioides were delivered by drops to samples and low-density polyethylene films were placed thereon to contact the samples. These were stored at room temperature (20 to 25°C) under dark conditions (shielded from light) and bright conditions (irradiated with black light (distance between filter and black light: about 20 cm)), and the viable counts after 24 hours were measured.

(2) Test Method

A. Test Strains

Bacteria:

Escherichia coli IFO 3972

Staphylococcus aureus subsp. aureus IFO 12732

Fungus:

Cladosporium cladosporioides IFO 6348

B. Test Mediums

NA medium: ordinary agar medium (Eiken Chemical Co., Ltd.)

1/500 NB medium: a medium where ordinary bouillon (Eiken Chemical Co., Ltd.) to which 0.2% meat extract had been added was diluted 500-fold by a phosphate buffer solution to prepare the pH to 7.0± 0.2

SCDLP medium: SCDLP medium (Nihon Pharmaceutical Co., Ltd.)

SA medium: standard agar medium (Eiken Chemical Co., Ltd.)

PDA medium: potato dextrose agar medium (Eiken Chemical Co., Ltd.)

C. Preparation of Bacteria Liquids

Bacteria:

A bacterial body obtained by again inoculating the NA medium with the test strain that had been preincubated at 35°C for 16 to 24 hours in the NA medium and which was incubated at 35°C for 16 to 20 hours was uniformly dispersed in the 1/500 NB medium and prepared such that the bacterial count per 1 mL became $2.5 \times 10^5$ to $1.0 \times 10^6$.

Fungus:

After being preincubated at 25°C for 7 to 10 days in the PDA medium, spores (conidiospores) were suspended in a 0.005% sodium dioctyl sulfosuccinate solution, filtered by a gauze, and prepared such that the spore number per 1 mL became $2.5 \times 10^5$ to $1.0 \times 10^6$.

D. Preparation of Samples

Filters (about 50 mm $\times$ 50 mm) were air-dried for 1 hour after moist heat sterilization (121°C, for 15 minutes), placed in plastic Petri dishes, and irradiated with black light (black light blue, FL20S BL-B 20W, 2 in parallel) for 12 hours or more to obtain the samples.

E. Test Operation

0.4 mL of the bacteria liquid was delivered in drops to the samples, low-density polyethylene films (40 mm $\times$ 40 mm) were placed thereon to contact the samples. These were stored at room temperature (20 to 25°C) under shielding from light and irradiation with black light (distance between filter and black light: about 20 cm). Further, a polyethylene film was used as comparative sample and tested in the same manner.

F. Measurement of Viable Count

Surviving bacteria were washed out from the samples by the SCDLP medium after storage for 24 hours, the number of viable bacteria in the washout fluid was measured by the pour plate culture method using the SA medium (incubated for 2 days at 35°C) for the bacteria and the PDA medium (incubated for 7 days at 25°C) for the fungus and converted per sample. Further, measurement immediately after inoculation was performed in a comparative sample.

3. Inactivation Rate of Enterotoxin

(1) Test Summary

Samples were inoculated with staphylococcal enterotoxin A (hereinafter abbreviated as "SET-A") and stored at room temperature (20 to 25°C) under dark conditions (shielded from light) and bright conditions (irradiated with ultraviolet light with a strength of about 1 mW/cm$^2$), and the SET-A density after 24 hours was measured and the decomposition rate was calculated.

(2) Test Method

A. Preparation of Standard Stock Solution

SET-A standard (Toxin Technology) was dissolved in 1 % sodium chloride including 0.5% bovine serum albumin to prepare a 5 $\mu$m/mL standard stock solution.

B. Standard Solution for Calibration Curve

The standard stock solution was diluted in a buffer solution accompanying VIDAX Staph enterotoxin (SET) (bioMerieux) to prepare 0.2, 0.5, and 1 ng/mL standard solutions.

C. Preparation of Samples

Filters were cut to a size of 50 mm $\times$ 50 mm and irradiated with a black light for 24 hours from a distance of about 1 cm to obtain the samples.

D. Test Operation

The samples were placed in plastic Petri dishes and inoculated with 0.4 mL of the SET-A standard stock solution. These were stored at room temperature (20 to 25°C) under shielding from light and irradiation with ultraviolet light having a strength of about 1 mW/cm$^2$ (black light, FL20S BL-B 20 W, 2 in parallel).

After storage for 24 hours, the SET-A was washed out from the sample with 10 mL of a buffer solution accompanying VIDAX Staph enterotoxin (SET) (bioMerieux) to obtain sample solutions.

A plastic Petri dish in which no sample was placed was inoculated with 0.4 mL of SET-A standard stock solution and 10 mL of a buffer solution accompanying VIDAX Staph enterotoxin (SET) (bioMerieux) was immediately added to obtain a reference.

E. Creation of Calibration Curve

The standard solution for calibration curve was measured by the ELISA method using VIDAX Staph enterotoxin (SET) (bioMerieux) to create a calibration curve from the concentration and fluorescence intensity of the standard solution.

F. Measurement of SET-A Density and Calculation of Decomposition Rate
The fluorescence intensity of the sample solutions was measured by the ELISA method using VIDAX Staph enterotoxin (SET) (bioMerieux), the SET-A density was determined from the calibration curve created in E., and the decomposition rate was calculated by the following expression.

$$\text{Decomposition rate (\%)} = (\text{measured value of reference} - \text{measured value of sample}$$

$$\text{solution}) / \text{measured value of comparison} \times 100$$

<Characteristics of the Air Conditioner>

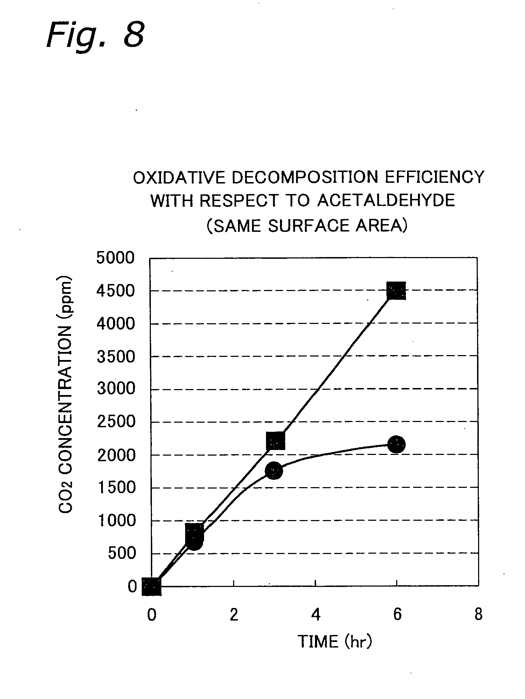

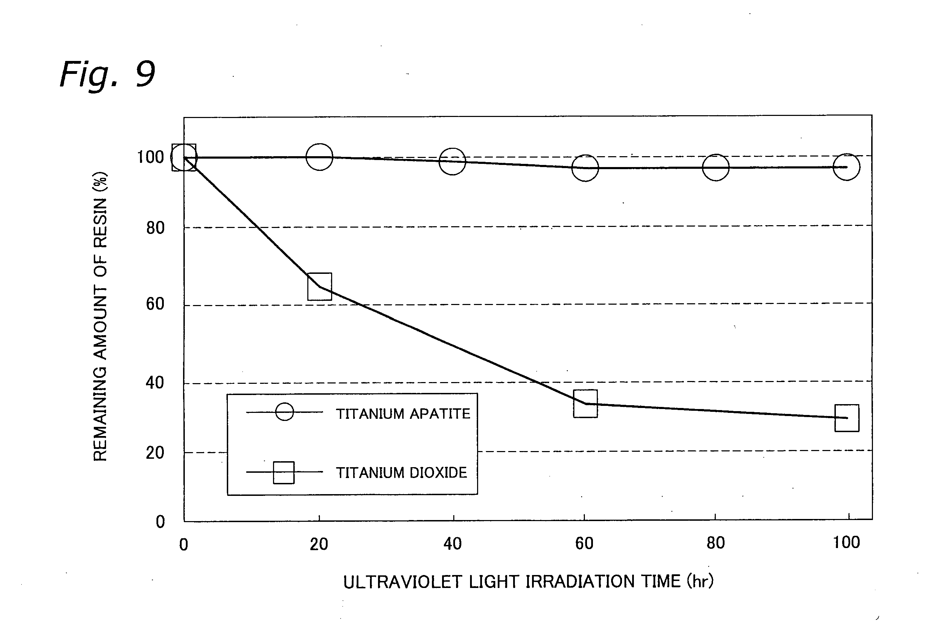

(1)
In the air conditioner 1 pertaining to the first embodiment, the cross flow fan 21, the front grill 25a (including the inlet 251, the outlet 252, the scroll 24, and the drain pans 29a and 29b), the front panel 26a, and the flap 253 are molded by resin in which titanium apatite is distributed. Further, some of the titanium apatite is exposed to the resin surface. Additionally, the titanium apatite specifically adsorbs odorous components, poisonous gases, bacteria, viruses and the like, and can powerfully oxidatively decompose and detoxify odorous components, poisonous gases, bacteria, viruses and the like by outside light and the ultraviolet lamp 60. For this reason, the air conditioner 1 can exhibit self-cleanability that is superior to that of an air conditioner where conventional titanium dioxide, which has poor adsorbing capability, is distributed.
(2)
In the air conditioner 1 pertaining to the first embodiment, titanium apatite is coated on the indoor heat exchanger 20. Additionally, the titanium apatite specifically adsorbs odorous components, poisonous gases, bacteria, viruses and the like, and can powerfully oxidatively decompose and detoxify odorous components, poisonous gases, bacteria, viruses and the like by outside light and the ultraviolet lamp 60. For this reason, the air conditioner 1 can exhibit self-cleanability that is superior to that of an air conditioner where conventional titanium dioxide, which has poor adsorbing capability, is distributed.
(3)
In the air conditioner 1 pertaining to the first embodiment, titanium apatite is distributed in the resin molded bodies 211, 25a, 26a, and 253. Conventionally, an optical semiconductor catalyst such as titanium dioxide has often been coated. However, because it is necessary to increase the number of manufacturing steps in order to coat the optical semiconductor catalyst, there has been the problem that the manufacturing cost runs up. However, here, titanium apatite that includes a photocatalytic function is distributed in the resin molded bodies. For this reason, it is not necessary to add manufacturing steps after the resin molding step. Consequently, the manufacturing cost can be kept as low as possible.
(4)
In the air conditioner 1 pertaining to the first embodiment, titanium apatite is distributed in the resin molded bodies 211, 25a, 26a, and 253. As shown in FIG. 8, titanium apatite exhibits decomposition performance that is superior to that of conventional anatase type titanium dioxide with respect to acetaldehyde. It will be noted that, in the graph of FIG. 8, the vertical axis represents carbon dioxide concentration and the horizontal axis represents time. In other words, decomposition performance is indirectly measured by measuring the concentration of carbon dioxide arising due to the decomposition of acetaldehyde. It will be noted that this measurement is performed matching the surface area of titanium apatite and the surface area of titanium dioxide. Further, as is apparent from the graph of FIG. 8, titanium apatite exhibits greater decomposition performance than titanium dioxide. Further, whereas titanium apatite continues to decompose acetaldehyde at a constant reaction speed even after 3 hours has elapsed, the decomposition capability of titanium dioxide becomes almost saturated when 3 hours elapses, and the difference between the decomposition capabilities of both becomes remarkable. For this reason, the air conditioner 1 can realize decomposition capability that is superior to that of an air conditioner using conventional anatase type titanium dioxide with respect to bacteria, viruses and the like.
Further, as shown in FIG. 9, whereas anatase type titanium dioxide erodes not only bacteria and viruses but also the base material (urethane resin) that carries the anatase type titanium dioxide, titanium apatite hardly erodes the base material. For this reason, titanium apatite does not require the expensive special binder that has been used when conventional anatase type titanium dioxide is carried in organic matter. Consequently, when titanium apatite is used, not only can superior decomposition capability be provided with respect to bacteria, viruses and the like, but fiber that includes a photocatalytic function can be manufactured at a low cost.

<Modifications>

(A)
In the air conditioner 1 pertaining to the first embodiment, the surfaces of the resin molded bodies 21, 25a, 26a, and 253 were substantially smooth, but the resin molded bodies 21, 25a, 26a, and 253 may also be surface-roughened. By doing so, more titanium apatite can be disposed on the surfaces of the resin molded bodies 21, 25a, 26a, and 253.
(B)
In the air conditioner 1 pertaining to the first embodiment, titanium apatite was distributed in the resin molded bodies such as the cross flow fan 21, the front grill 25a (including the inlet 251, the outlet 252, the scroll 24, and the drain pans 29a and 29b), the front panel 26a, and the flap 253, but titanium apatite may also be coated on those resin molded bodies. In this case, the surfaces of the resin molded bodies 21, 25a, 26a, and 253 may be roughened. By doing so, more titanium apatite can be disposed on the surfaces of the resin molded bodies 21, 25a, 26a, and 253. Further, a mixture of titanium apatite and a conventional optical semiconductor catalyst may be coated on the resin molded bodies 21, 25a, 26a, and 253.
(C)
In the air conditioner 1 pertaining to the first embodiment, the ultraviolet lamp 60 was employed as a light source in order to activate the photocatalytic function of the titanium apatite, but an LED or the like may also be employed as a light source instead of this. Because an LED is less expensive than the ultraviolet lamp 60, the manufacturing cost can be reduced.
(D)
In the air conditioner 1 pertaining to the first embodiment, an ultraviolet lamp was employed as a light source in order to activate the photocatalytic function of the titanium apatite, but a plasma generator (e.g., a glow discharge device, a barrier discharge device, and a streamer discharge device, etc.) may also be employed instead of this. When plasma is generated, ultraviolet light is created in the same manner, and consequently the photocatalytic function of the titanium apatite can be activated by that ultraviolet light. Further, when plasma is generated, radical species of high-speed electrons, ions, ozone and hydroxy radicals, and active species of other excited molecules (excited oxygen molecules, excited nitrogen molecules, excited water molecules) are created, so that odorous components, poisonous gases, bacteria, viruses and the like can be even more efficiently decomposed and detoxified.
(E)
In the first embodiment, titanium apatite was distributed in the cross flow fan 21, the front grill 25a, the front panel 26a, and the flap 253, but the targets in which titanium apatite is distributed are not limited to the configural parts of the indoor unit 2 of the air conditioner 1 as described above. For example, when an air supply pipe and an air discharge pipe of a total heat exchanger, or an air duct and the like of an air duct system, are molded from resin, titanium apatite may be distributed in these.

<Second Embodiment>

<Overall Configuration of Air Conditioner>

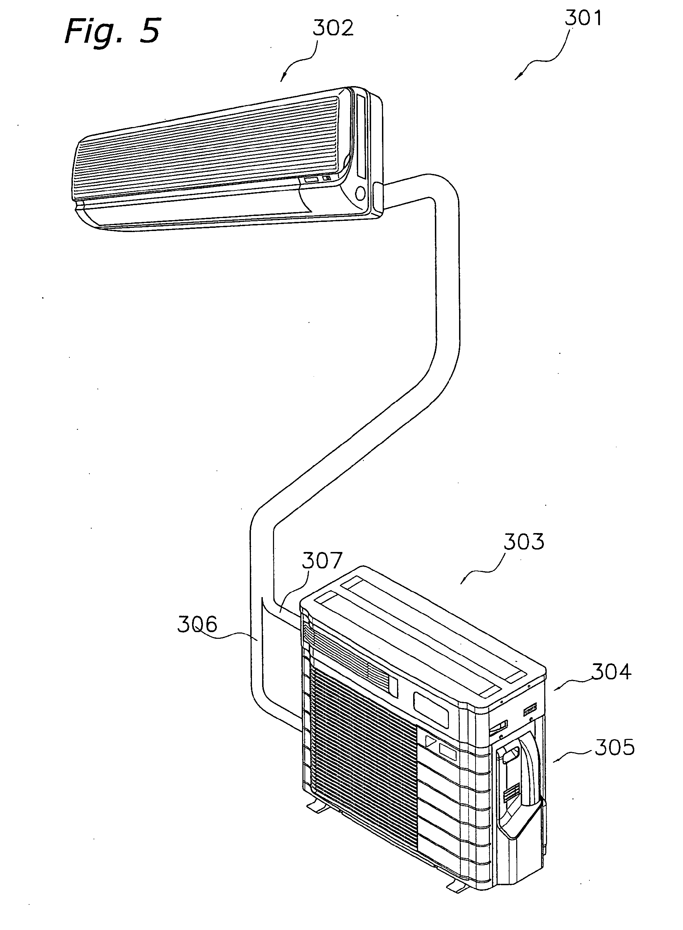

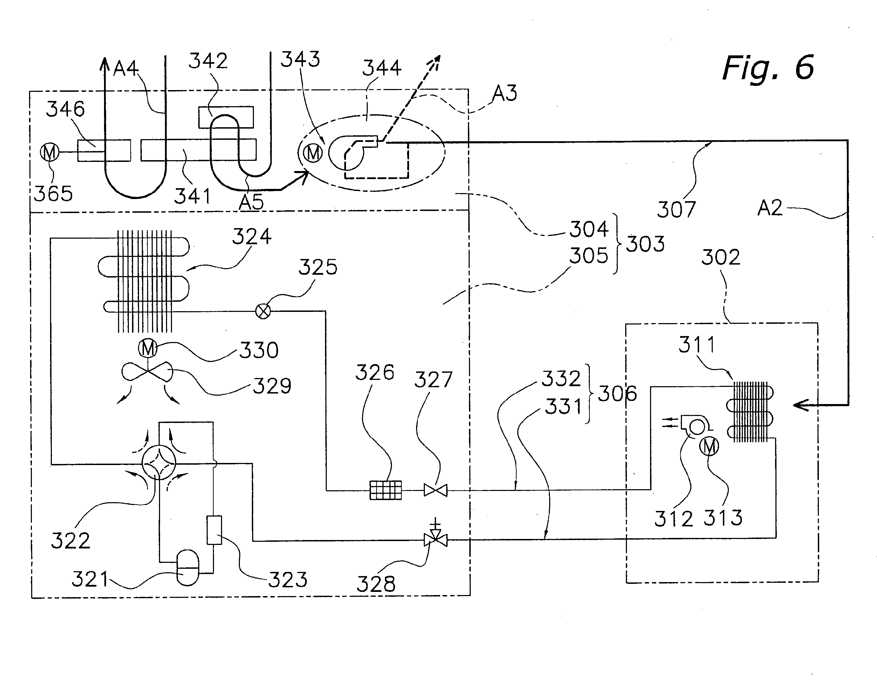

The exterior of an air conditioner 301 pertaining to a second embodiment of the present invention is shown in FIG. 5.
The air conditioner 301 is configured by an indoor unit 302, which is attached to the surface of a wall or the like in a room, and an outdoor unit 303, which is disposed outside the room. The outdoor unit 303 is disposed with an outdoor air conditioning unit 305, which houses an outdoor heat exchanger and a propeller fan and the like, and a humidified air supply and discharge unit 304. An indoor heat exchanger is housed inside the indoor unit 302, and an outdoor heat exchanger is housed inside the outdoor unit 303. Additionally, the heat exchangers and refrigerant pipes 331 and 332 (see FIG. 6) that connect these heat exchangers configure a refrigerant circuit. Further, an air supply and discharge pipe 307 that is used when supplying outdoor air and humidified air from the humidified air supply and discharge unit 304 to the indoor unit 302 and when discharging the room air to the outside is disposed between the outdoor unit 303 and the indoor unit 302.

<Configuration of the Refrigerant Circuit>

FIG. 6 is a diagram in which the outlines of the flows of air have been added to a system diagram of the refrigerant circuit used in the air conditioner 301.

An indoor heat exchanger 311 is disposed in the indoor unit 302. The indoor heat exchanger 311 comprises a heat exchange pipe that is folded back plural times at both length-direction ends and plural fins through which the heat exchange pipe is inserted, and performs heat exchange with air coming into contact therewith.

Further, a cross flow fan 312 and an indoor fan motor 313 that drives the cross flow fan 312 to rotate are disposed inside the indoor unit 302. The cross flow fan 312 is configured in a circular cylinder shape, with numerous blades being disposed on its peripheral surface, and creates an airflow in a direction intersecting its rotational axis. The cross flow fan 312 causes room air to be taken into the indoor unit 302, and causes air after heat exchange has been performed with the indoor heat exchanger 311 to be blown into the room.

A compressor 321, a four-way switch valve 322 connected to the discharge side of the compressor 321, an accumulator 323 connected to the intake side of the compressor 321, an outdoor heat exchanger 324 connected to the four-way switch valve 322, and an electrically powered valve 325 connected to the outdoor heat exchanger 324 are disposed in the outdoor air conditioning unit 305. The electrically powered valve 325 is connected to a refrigerant pipe 332 via a filter 326 and a liquid shutoff valve 327, and is connected to one end of the indoor heat exchanger 311 via this refrigerant pipe 332. Further, the four-way switch valve 322 is connected to a refrigerant pipe 331 via a gas shutoff valve 328, and is connected to the other end of the indoor heat exchanger 311 via this refrigerant pipe 331. These refrigerant pipes 331 and 332 correspond to the refrigerant pipe 306 shown in FIG. 5.

Further, a propeller fan 329 for discharging, to the outside, air after heat exchange by the outdoor heat exchanger 324 is disposed inside the outdoor air conditioning unit 305.
The propeller fan 329 is driven to rotate by an outdoor fan motor 330.

<Configuration of the Outdoor Unit>

As shown in FIG. 5, the outdoor unit 303 is configured as a result of the lower outdoor air conditioning unit 305 and the upper humidified air supply and discharge unit 304 being integrated.

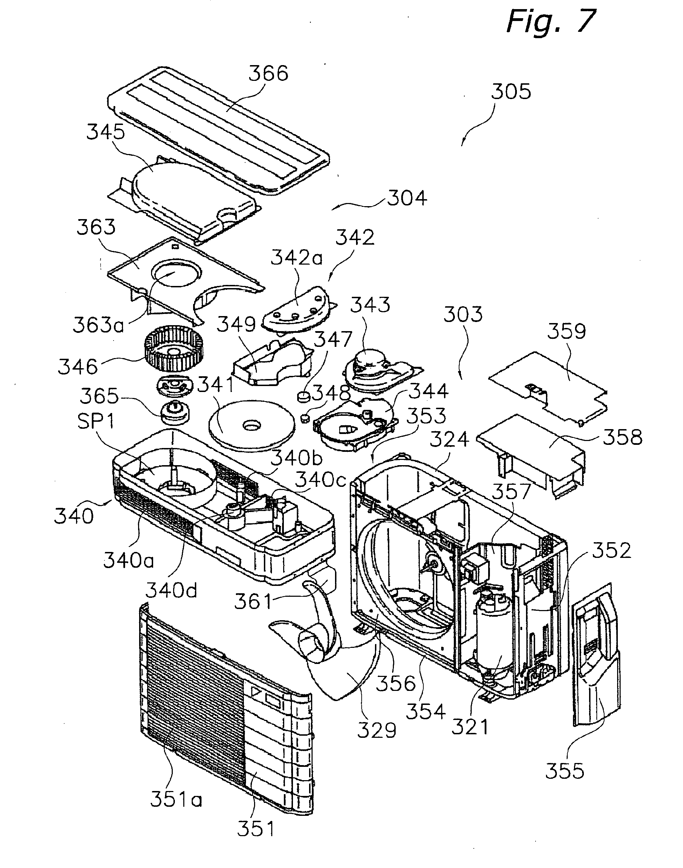

First, the configuration of the outdoor air conditioning unit 305 will be described on the basis of FIG. 7.

(Configuration Pertaining to the Outdoor Air Conditioning Unit)

The outdoor air conditioning unit 305 is configured by casing members such as a front panel 351, side plates 352 and 353, a protective metal screen (not shown), and a metal bottom plate 354, and by refrigerant circuit configural parts housed therein.

The front panel 351 is a resin member that covers the front of the outdoor air conditioning unit 305, and is disposed downstream of the air passing through the outdoor heat exchanger 324 with respect to the outdoor heat exchanger 324. An outdoor air conditioning unit outlet 351a comprising plural slit-shaped openings is disposed in the front panel 351, and the air passing through the outdoor heat exchanger 324 passes through the outdoor air conditioning unit outlet 351a from the inside of the outdoor air conditioning unit 305 and is blown to the outside of the outdoor unit 303. Further, a fan outlet member 356 and a partition plate 357 are attached to the rear of the front panel 351.

The side plates 352 and 353 comprise a right side plate 352 and a left side plate 353, which are metal members that cover the side of the outdoor air conditioning unit 305. Here, the right side plate 353 is disposed on the right side and the left side plate 353 is disposed on the left side when the outdoor unit 303 is seen from the front. It will be noted that the side plates 352 and 353 are disposed substantially parallel with respect to the blowout direction of the air that passes through the outdoor heat exchanger 324 and is blown out from the outdoor air conditioning unit outlet 351a. Further, a shutoff valve cover 355 for protecting the liquid shutoff valve 327 and the gas shutoff valve 328 (see FIG. 6) is attached to the right side plate 352.

The refrigerant circuit configural parts are the outdoor heat exchanger 324, the compressor 321, the accumulator 323, the four-way switch valve 322, and the electrically powered valve 325 (see FIG. 6) and the like.

The outdoor heat exchanger 324 has a substantial "L" shape when seen in plan view and is disposed in front of the protective metal screen covering the rear of the outdoor air conditioning unit 305.

The outdoor fan motor 330 and the propeller fan 329 are disposed in an aeration space between the partition plate 357 and the left side plate 353 and in front of the outdoor heat exchanger 324. The outdoor fan motor 330 causes the propeller fan 329 to rotate. The propeller fan 329 causes the air taken into the outdoor air conditioning unit 305 to contact the outdoor heat exchanger 324 and to be discharged to the front of the front panel 351 from the outdoor air conditioning unit outlet 351 a.

Other refrigerant circuit configural parts such as the compressor 321, the accumulator 323, the four-way switch valve 322, and the electrically powered valve 325 are disposed in a machine chamber between the partition plate 357 and the right side plate 352.

Further, an electrical components unit 358 is attached to the top portion of the outdoor air conditioning unit 305. The electrical components unit 358 is configured by an electrical components box and a printed board on which circuit parts for controlling the respective units are mounted. A fireproof plate 359 is attached to the top of the electrical components unit 358.

(Configuration of the Humidified Air Supply and Discharge Unit)

Next, the configuration of the humidified air supply and discharge unit 304 will be described mainly on the basis of Fig. 7.

A. Humidified Air Supply and Discharge Unit Casing

The humidified air supply and discharge unit 304 includes a humidified air supply and discharge unit casing 340. The humidified air supply and discharge unit casing 340 covers the front, the rear, and both sides of the humidified air supply and discharge unit 304, and is disposed so as to contact the upper portion of the outdoor air conditioning unit 305.

An adsorption-use air outlet 340a comprising plural slit-shaped openings is disposed in the front side of the humidified air supply and discharge unit casing 340, and air passes through this adsorption-use air outlet 340a and is blown to the outside of the outdoor unit 303.

Further, an adsorption-use air inlet 340b and an air supply and discharge opening 340c are disposed side by side in the left-right direction in the rear side of the humidified air supply and discharge unit casing 340. The adsorption-use air inlet 340b is an opening through which passes air that is to be taken in from the outside in order to cause a moisture adsorbing and humidifying rotor 341 to adsorb moisture. The air supply and discharge opening 340c is an opening through which passes air that is to be taken in so that the air can be sent to the indoor unit 302 or through which passes air that has been taken in from the indoor unit 302 and is to be discharged to the outside.

Further, the top portion of the humidified air supply and discharge unit casing 340 is covered by a top plate 366.

The right side of the inside of the humidified air supply and discharge unit casing 340 serves as a space for housing the moisture adsorbing and humidifying rotor 341 and the like, and the left side of the inside of the humidified air supply and discharge unit casing 340 serves as an adsorption-use fan housing space SP1 for housing an adsorption-use fan 346 and the like. The moisture adsorbing and humidifying rotor 341, a heater assembly 342, a radial fan assembly 343, a switching damper 344, an adsorption-side duct 345, and the adsorption-use fan 346 and the like are disposed inside the humidified air supply and discharge unit casing 340.

B. Moisture Adsorbing and Humidifying Rotor

The moisture adsorbing and humidifying rotor 341 is a honeycomb-structure ceramic rotor that is substantially discoid, and has a structure such that air can easily pass therethrough. The moisture adsorbing and humidifying rotor 341 is a rotor that has a circular shape when seen in plan view, and has a fine honeycomb shape in cross section cut by a horizontal plane. Additionally, air passes through numerous cylinder portions of the moisture adsorbing and humidifying rotor 341 whose cross sections are polygonal.

The principal portion of the moisture adsorbing and humidifying rotor 341 is fired from an adsorbing agent such as zeolite, silica gel, or alumina. This adsorbing agent such as zeolite has the property of adsorbing moisture in the air that makes contact therewith and releasing water that has been adsorbed and included therein as a result of the adsorbing agent being heated.

The moisture adsorbing and humidifying rotor 341 is rotatably supported via an unillustrated rotor guide on a support shaft 340d disposed in the humidified air supply and discharge unit casing 340. A gear is formed on the peripheral surface of the moisture adsorbing and humidifying rotor 341, and this gear meshes with a rotor drive gear 348 attached to a drive shaft of a rotor drive motor 347.

C. Heater Assembly

The heater assembly 342 is configured by a heater cover 342a and a heater body (not shown) housed therein, and heats air that is taken in from the outside and sent to the moisture adsorbing and humidifying rotor 341. Further, the heater assembly 342 is disposed so as to cover substantially half (the right side half) of the upper surface of the moisture adsorbing and humidifying rotor 341. An inlet for taking in air and an outlet for discharging to the moisture adsorbing and humidifying rotor 341 the air that has been heated by the heater assembly 342 are formed in the underside of the heater assembly 342. The heater assembly 342 is attached to the top of the moisture adsorbing and humidifying rotor 341 via a heater support plate 349.

D. Radial Fan Assembly

The radial fan assembly 343 is disposed on the side of the moisture adsorbing and humidifying rotor 341, and includes a radial fan (not shown) and a radial fan motor (not shown) that causes the radial fan to rotate. Further, the radial fan assembly 343 shares an upper lid (not shown) with the switching damper 344, and the upper lid closes the bottom side of the radial fan assembly 343. An air outlet and an air inlet are disposed in the upper lid. The air outlet is an opening through which passes air that is sent from the radial fan assembly 343 into the switching damper 344. The air inlet is an opening through which passes air sent from the inside of the switching damper 344 to the radial fan assembly 343. The radial fan assembly 343 creates a flow of air from the air supply and discharge opening 340c into the room via the moisture adsorbing and humidifying rotor 341 and the switching damper 344, and sends air taken in from the outside to the indoor unit 302. Further, the radial fan assembly 343 can also discharge air that has been taken in from the indoor unit 302 to the outside. The radial fan assembly 343 switches between these operations when the switching damper 344 is switched.

When the radial fan assembly 343 sends to the indoor unit 302 air that has been taken in from the outside, it sends, to an air supply and discharge duct 361 via the switching damper 344, air that has passed through the moisture adsorbing and humidifying rotor 341 and fallen from the front portion of the substantially half portion at the right side of the moisture adsorbing and humidifying rotor 341. The air supply and discharge duct 361 is connected to the air supply and discharge pipe 307 (see FIG. 5), and the radial fan assembly 343 supplies air to the indoor unit 302 via the air supply and discharge duct 361 and the air supply and discharge pipe 307.

When the radial fan assembly 343 discharges to the outside the room air that has been taken in from the indoor unit 302, it discharges, to the outside from the air supply and discharge opening 340c disposed in the rear side of the humidified air supply and discharge unit casing 340, air that has been sent from the air supply and discharge duct 361.

E. Switching Damper

The switching damper 344 is a rotary airflow path switching means disposed below the radial fan assembly 343, and switches between a first state, a second state, and a third state.

In the first state, the air blown out from the radial fan assembly 343 passes through the air supply and discharge pipe 307 via the air supply and discharge duct 316 and is supplied to the indoor unit 302. Thus, in the first state, the air flows in the direction of the arrow represented by the solid line arrow A2 in FIG. 6, and humidified air or outdoor air passes through the air supply and discharge pipe 307 and is supplied to the indoor unit 302.

In the second state, the air flows in the direction of the arrow represented by the dotted line arrow A3 in FIG. 6, and the air flowing from the indoor unit 302 through the air supply and discharge pipe 307 and the air supply and discharge duct 361 is discharged to the outside from the radial fan assembly 343 via the air supply and discharge opening 340c.

In the third state, the path connecting the switching damper 344 and the air supply and discharge duct 361 is closed so that the flow of air between the outdoor unit 303 and the indoor unit 302 is cut off.

F. Adsorption-Side Duct and Adsorption-Use Fan

The adsorption-side duct 345 covers the portion of the upper surface of the moisture adsorbing and humidifying rotor 341 where the heater assembly 342 is not positioned (the substantially half portion at the left side). Together with a later-described adsorption-side bellmouth 363, the adsorption-side duct 345 forms an airflow path from the upper surface of the portion at the left half of the moisture adsorbing and humidifying rotor 341 to the upper portion of the adsorption-use fan housing space SP 1 described below.

The adsorption-use fan 346 housed in the adsorption-use fan housing space SP 1 is a centrifugal fan that rotates by an adsorption-use fan motor 365, and takes in air from an open portion 363a in the adsorption-side bellmouth 363 disposed in the upper portion to create an airflow flowing from the adsorption-use air inlet 340b to the open portion 363a via the moisture adsorbing and humidifying rotor 341. Additionally, the adsorption-use fan 346 discharges, from the adsorption-use air outlet 340a to the front of the humidified air supply and discharge unit casing 340, dry air whose moisture has been adsorbed when the air passes through the moisture adsorbing and humidifying rotor 341. The adsorption-side bellmouth 363 is disposed in the upper portion of the adsorption-use fan housing space SP1 and plays the role of guiding, to the adsorption-use fan 346, the air passing through the airflow path formed by the adsorption-side duct 345.

<Self-Cleaning Function of the Air Conditioner>

The air supply and discharge pipe 307 is a resin molded body, and titanium apatite is distributed in the resin. Further, some of the titanium apatite is exposed to the resin surface. It will be noted that part of the air supply and discharge pipe 307 is transparent such that outside light shines into the inside.

The humidified air supply and discharge unit casing 340 (including the adsorption-use air outlet 340a, the adsorption-use air inlet 340b, the air supply and discharge opening 340c, and the support shaft 340d), the top plate 366, the adsorption-use fan 346, the rotor drive gear 348, the radial fan, the switching damper 344, the air supply and discharge duct 361, the adsorption-side duct 345, and the adsorption-side bellmouth 363, which are members configuring the humidified air supply and discharge unit 304, are resin molded bodies, and titanium apatite is distributed in the resin. It will be noted that the surfaces of the resin molded bodies 340, 366, 346, 348, 344, 361, 345, and 363 are substantially smooth. Further, some of the titanium apatite is exposed to the resin surface. Further, the moisture adsorbing and humidifying rotor 341 is a ceramic body, and titanium apatite is coated on its surface. Further, the heater cover 342a is a metal body made of aluminium or the like, and titanium apatite is coated on its surface. It will be noted that an unillustrated ultraviolet lamp is disposed in the humidified air supply and discharge unit 304. Further, the humidified air supply and discharge unit 304 is configured such that outside light shines therein from the adsorption-use air outlet 340a, the adsorption-use air inlet 340b, and the air supply and discharge opening 340c.

The cross flow fan 312 and the casing and the like, which are members configuring the indoor unit 302 of the air conditioner 301, are resin molded bodies, and titanium apatite is distributed in the resin. Further, some of the titanium apatite is exposed to the resin surface. Further, the indoor heat exchanger 311 is a metal body made of aluminium or the like, and titanium apatite is coated on its surface. It will be noted that an ultraviolet lamp is disposed in the indoor unit 302.

Additionally, the titanium apatite distributed in or coated on the above members specifically adsorbs odorous components, poisonous gases, bacteria, viruses and the like. Additionally, the titanium apatite exhibits powerful oxidizing power by outside light or the ultraviolet lamp, and can decompose and detoxify odorous components, poisonous gases, bacteria, viruses and the like.

<Operation and Control Content of the Humidified Air Supply and Discharge Unit>

In order to describe the flow of air in the air conditioner 301 pertaining to the present embodiment, the operation of the humidified air supply and discharge unit 304 will be described below. Further, here, control content such as a humidifying operation will be described.

<Operation of the Humidified Air Supply and Discharge Unit>

When a humidifying operation is performed in the air conditioner 301 pertaining to the present embodiment, the switching damper 344 is switched to the first state. The operation of the humidified air supply and discharge unit 304 when performing the humidifying operation and an air supply operation will be described below on the basis of FIG. 6 and FIG. 7.

The humidified air supply and discharge unit 304 drives the adsorption-use fan 346 to rotate, whereby it takes in air from the outside from the adsorption-use air inlet 340b into the humidified air supply and discharge unit casing 340. The air entering the humidified air supply and discharge unit casing 340 passes through the substantially half portion at the left side of the moisture adsorbing and humidifying rotor 341, passes through the adsorption-use air outlet 340a from the adsorption fan housing space SP1 via the adsorption-use fan 346 and the airflow path formed by the adsorption-side duct 345 and the adsorption-side bellmouth 346, and is discharged to the front of the outdoor unit 303 (see arrow A4 in FIG. 6 and FIG. 7). When the air taken into the humidified air supply and discharge unit casing 340 from the outside passes through the substantially half portion at the left side of the moisture adsorbing and humidifying rotor 341, the moisture adsorbing and humidifying rotor 341 adsorbs the moisture included in the air.

The substantially half portion at the left side of the moisture adsorbing and humidifying rotor 341 that has adsorbed the moisture in this adsorption process becomes the substantially half portion at the right side of the moisture adsorbing and humidifying rotor 341 as a result of the moisture adsorbing and humidifying rotor 341 rotating. That is, the adsorbed moisture moves to the portion of the moisture adsorbing and humidifying rotor 341 positioned below the heater assembly 342 in accompaniment with the rotation of the moisture adsorbing and humidifying rotor 341. Then, the moisture that has moved here is released into the airflow created by the radial fan assembly 343 by heat from the heater assembly 342.

When the radial fan assembly 343 is driven, outside air is taken into the humidified air supply and discharge unit casing 340 from the air supply and discharge opening 340c, and that air passes upward from below the deep portion of the substantially half portion at the right side of the moisture adsorbing and humidifying rotor 341 and is guided into the heater assembly 342 from the inlet in the underside of the heater assembly 342. Then, the air entering the heater assembly 342 is discharged from a discharge opening in the underside of the heater assembly 342, passes downward from above through the front portion of the substantially half portion at the right side of the moisture adsorbing and humidifying rotor 341, passes through the inside of the switching damper 344 from a casing side portion opening in the switching damper 344, and reaches the radial fan assembly 343 (see arrow A5 in FIG. 6 and FIG. 7). This airflow is created by the radial fan assembly 343. As described above, the radial fan assembly 343 sends, to the indoor unit 302 via the switching damper 344, the air supply and discharge duct 361 and the air supply and discharge pipe 307, the air passing through the moisture adsorbing and humidifying rotor 341 and the switching damper 344. The air sent to the indoor unit 302 thus comes to include the moisture that had been adsorbed by the moisture adsorbing and humidifying rotor 341.

In this manner, the air supplied from the humidified air supply and discharge unit 304 to the indoor unit 302 is blown into the room via the indoor heat exchanger 311. It will be noted that, by not activating the adsorption- use fan motor 365 and the heater assembly 342, the air conditioner 301 can also perform just air supply and air ventilation where outdoor air is taken in and sent to the indoor unit 302 without being humidified.

(Control of the Humidified Air Supply and Discharge Unit by a Control Unit)

Next, the control of the humidified air supply and discharge unit 304 by a control unit will be described. The control content includes control of the aforementioned humidifying operation and control relating to an air supply operation, an air discharge operation, and a defrosting operation.

A. Humidifying Operation

When the control unit receives a humidification command from a remote controller or determines that the humidifying operation is necessary in response to a humidification automatic operation command from a remote controller, the control unit performs the humidifying operation. This humidifying operation is also often performed together with a heating operation. In the humidifying operation, the rotor drive motor 347, the heater body, the radial fan motor, and the adsorption-use fan motor 365 inside the humidified air supply and discharge unit 304 are driven. In this humidifying operation, as mentioned above, the rotation of the adsorption-use fan 346 causes the moisture adsorbing and humidifying rotor 341 to adsorb moisture included in the air guided from the outside into the humidified air supply and discharge unit 304, and the air heated by the heater body passes through the moisture adsorbing and humidifying rotor 341 by the rotation of the radial fan, so that air including the moisture released from the moisture adsorbing and humidifying rotor 341 is supplied to the indoor unit 302 via the air supply and discharge pipe 307.

B. Air Supply Operation and Air Discharge Operation

When the control unit determines that it is necessary to perform the indoor ventilation, the control unit performs an air supply operation or an air discharge operation. The air supply operation is an operation where outdoor air is taken into the humidified air supply and discharge unit 304 and supplied to the indoor unit 302 from the air supply and discharge hose 307. The air discharge operation is an operation where the radial fan assembly 343 of the humidified air supply and discharge unit 304 causes air inside the air supply and discharge hose 307 to be taken in - that is, where the radial fan assembly 343 causes room air to be taken into the air supply and discharge hose 307 via the indoor unit 302 - and causes that air to be discharged from the radial fan assembly 343 to the outside of the outdoor unit 303. The flows of air in the air supply operation and in the air discharge operation are as in the description of the first state and the second state that was mentioned together with the detailed configuration of the switching damper 344. During the air supply operation, the switching damper 344 is switched to the first state such that the outdoor air passes through the air supply and discharge hose 307 and is supplied to the indoor unit 302. On the other hand, during the air discharge operation, the switching damper 344 is switched to the second state, and the air passing from the indoor unit 302 through the air supply and discharge hose 307 passes from the air outlet in the radial fan assembly 343 through the casing side portion opening in the switching damper 344 and is discharged to the outside of the machine. It will be noted that, in the air supply operation and the air discharge operation, the adsorption-use fan 346 and the rotor drive motor 347 of the humidified air supply and discharge unit 304 are not activated, but just the radial fan is rotated.

Further, when one wishes for the air conditioner to also take in fresh outdoor air while air conditioning and to perform air ventilation gently, the air supply operation can be selected.

It will be noted that when the air conditioner 1 stops running, the control unit switches the switching damper 344 to the third state, which is different from the first state and the second state. In the third state, the inside and the outside are not communicated.

<Characteristics of the Air Conditioner>

(1)

In the air conditioner 301 pertaining to the second embodiment, the air supply and exhaust pipe 307 is molded by resin in which titanium apatite is distributed. Further, some of the titanium apatite is exposed to the resin surface. Additionally, the titanium apatite specifically adsorbs odorous components, poisonous gases, bacteria, viruses and the like, and can powerfully oxidatively decompose and detoxify odorous components, poisonous gases, bacteria, viruses and the like by sunlight or an ultraviolet lamp. For this reason, the air conditioner 301 can exhibit self-cleanability that is superior to that of an air conditioner

where conventional titanium dioxide, which has poor adsorbing capability, is distributed.

(2)

In the air conditioner 301 pertaining to the second embodiment, the humidified air supply and discharge unit casing 340 (including the adsorption-use air outlet 340a, the adsorption-use air inlet 340b, the air supply and discharge opening 340c, and the support shaft 340d), the top plate 366, the adsorption-use fan 346, the rotor drive gear 348, the radial fan, the switching damper 344, the air supply and discharge duct 361, the adsorption-side duct 345, and the adsorption-side bellmouth 363, which are members configuring the humidified air supply and discharge unit 304, are molded by resin in which titanium apatite is distributed. Further, some of the titanium apatite is exposed to the resin surface. Additionally, the titanium apatite specifically adsorbs odorous components, poisonous gases, bacteria, viruses and the like, and can powerfully oxidatively decompose and detoxify odorous components, poisonous gases, bacteria, viruses and the like by sunlight or the ultraviolet lamp 60. For this reason, the air conditioner 301 can exhibit self-cleanability that is superior to that of an air conditioner where conventional titanium dioxide, which has poor adsorbing capability, is distributed.

(3)

In the air conditioner 301 pertaining to the second embodiment, the moisture adsorbing and humidifying rotor 341 and the heater cover 342a are coated with titanium apatite. Additionally, the titanium apatite specifically adsorbs odorous components, poisonous gases, bacteria, viruses and the like, and can powerfully oxidatively decompose and detoxify odorous components, poisonous gases, bacteria, viruses and the like by the ultraviolet lamp 60. For this reason, the air conditioner 1 can exhibit self-cleanability that is superior to that of an air conditioner where conventional titanium dioxide, which has poor adsorbing capability, is distributed.

(4)

In the air conditioner 301 pertaining to the second embodiment, the cross flow fan 312 and the casing and the like, which are members configuring the indoor unit 302, are molded by resin in which titanium apatite is distributed. Further, some of the titanium apatite is exposed to the resin surface. Additionally, the titanium apatite specifically adsorbs odorous components, poisonous gases, bacteria, viruses and the like, and can powerfully oxidatively decompose and detoxify odorous components, poisonous gases, bacteria, viruses and the like by sunlight or an ultraviolet lamp. For this reason, the air conditioner 301 can exhibit self-cleanability that is superior to that of an air conditioner where conventional titanium dioxide, which has poor adsorbing capability, is distributed.

(5)

In the air conditioner 301 pertaining to the second embodiment, titanium apatite is coated on the indoor heat exchanger 311. Additionally, the titanium apatite specifically adsorbs odorous components, poisonous gases, bacteria, viruses and the like, and can powerfully oxidatively decompose and detoxify odorous components, poisonous gases, bacteria, viruses and the like by the ultraviolet lamp 60. For this reason, the air conditioner 1 can exhibit self-cleanability that is superior to that of an air conditioner where conventional titanium dioxide, which has poor adsorbing capability, is distributed.

(6)

In the air conditioner 301 pertaining to the second embodiment, titanium apatite is distributed in the resin molded bodies 307, 340, 340a, 340b, 340c, 340d, 344, 345, 346, 348, 361, 363, and 366. Conventionally, an optical semiconductor catalyst such as titanium dioxide has often been coated. However, because it is necessary to increase the number of manufacturing steps in order to coat the optical semiconductor catalyst, there has been the problem that the manufacturing cost runs up. However, here, titanium apatite that includes a photocatalytic function is distributed in the resin molded bodies. For this reason, it is not necessary to add manufacturing steps after the resin molding step. Consequently, the manufacturing cost can be kept as low as possible.

(7)

In the air conditioner 301 pertaining to the second embodiment, titanium apatite is distributed in the resin molded bodies 307, 340, 340a, 340b, 340c, 340d, 344, 345, 346, 348, 361, 363, and 366. Conventionally, an optical semiconductor catalyst such as titanium dioxide erodes resin when it is active, so that a special binder has been necessary when the optical semiconductor catalyst is distributed in the resin. However, titanium apatite hardly erodes resin when it is active despite the fact that it exhibits higher decomposing capability than titanium dioxide with respect to bacteria, viruses and the like. For this reason, a special binder is not necessary. Consequently, a resin molded body that includes a cleaning function can be manufactured at a low cost.

<Modifications>

(A)
In the air conditioner 301 pertaining to the second embodiment, the surfaces of the resin molded bodies 340, 366, 346, 348, 344, 361, 345, and 363 were substantially smooth, but the resin molded bodies 340, 366, 346, 348, 344, 361, 345, and 363 may also be surface-roughened. By doing so, more titanium apatite can be disposed on the surfaces of the resin molded bodies 340, 366, 346, 348, 344, 361, 345, and 363.

(B)
In the air conditioner 301 pertaining to the second embodiment, titanium apatite was distributed in the resin molded bodies such as the air supply and discharge tube 307, and the humidified air supply and discharge unit casing 340 (including the adsorption-use air outlet 340a, the adsorption-use air inlet 340b, the air supply and discharge opening 340c, and the support shaft 340d), the top plate 366, the adsorption-use fan 346, the rotor drive gear 348, the radial fan, the switching damper 344, the air supply and discharge duct 361, the adsorption-side duct 345, and the adsorption-side bellmouth 363, which are members configuring the humidified air supply and discharge unit 304, and the cross flow fan 312 and the casing and the like, which are members configuring the indoor unit 302, but titanium apatite may also be coated on these resin molded bodies. In this case, the surfaces of the resin molded bodies may also be roughened. By doing so, more titanium apatite can be disposed on the surfaces of the resin molded bodies 340, 366, 346, 348, 344, 361, 345, and 363. Further, a mixture of titanium apatite and a conventional optical semiconductor catalyst may also be coated on the resin molded bodies 340, 366, 346, 348, 344, 361, 345, and 363.

(C)
In the air conditioner 301 pertaining to the second embodiment, sunlight or an ultraviolet lamp was employed as a light source in order to activate the photocatalytic function of the titanium apatite, but an LED or the like may also be employed as the light source instead of this.

(D)
In the air conditioner 301 pertaining to the second embodiment, sunlight or an ultraviolet lamp was employed as a light source in order to activate the photocatalytic function of the titanium apatite, but a plasma generator or the like may also be employed instead of this. When plasma is generated, ultraviolet light is created in the same manner, and consequently the photocatalytic function of the titanium apatite can be activated by that ultraviolet light. Further, when plasma is generated, radical species of high-speed electrons, ions, ozone and hydroxy radicals, and active species of other excited molecules (excited oxygen molecules, excited nitrogen molecules, excited water molecules) are created, so that odorous components, poisonous gases, bacteria, viruses and the like can be more efficiently decomposed and detoxified.

(E)
In the second embodiment, titanium apatite was distributed in the resin molded bodies of the air conditioner 301 having a humidifying function, but titanium apatite may also be distributed in resin molded bodies of an air conditioner having an oxygen enrichment function (e.g., an oxygen-enriched air supply hose, etc.).

**INDUSTRIAL APPLICABILITY**

The air conditioner pertaining to the present invention can decompose and remove bacteria, viruses and the like, which are sources of odor, with greater efficiency than an air conditioner that carries a conventional optical semiconductor catalyst, and can also be applied for uses such as an air purifier for which self cleaning is necessary in order to prevent secondary infection.

**Claims**

1.  An air conditioner (1, 301) comprising:

    a resin part (24, 251, 252, 253, 307) that configures an air distribution path for distributing air into a room; and
    an apatite that includes a photocatalytic function and is disposed on at least part of the resin part (24, 251, 252, 253, 307).

**2.** The air conditioner (1) as recited in claim 1, further comprising an impeller (21) for supplying the air into the room, wherein the resin part is a scroll part (24) that causes a flow of the air generated as a result of the impeller (21) rotating to converge.

**3.** The air conditioner (1) as recited in claim 1 or 2, wherein the resin part is a flap (253) that adjusts the flow direction of the air into the room.

**4.** The air conditioner (301) as recited in any of claims 1 to 3, further comprising:

a humidifying unit (304) that humidifies the air, and
an indoor unit (302) that is disposed in the room,

wherein the air distribution path is a humidified air distribution path for supplying, to the indoor unit, the air that has been humidified by the humidifying unit (304).

**5.** An air conditioner (1, 301) comprising:

a resin part (29a, 29b, 21, 304) that is disposed in an air distribution path for distributing air into a room; and
an apatite that includes a photocatalytic function and is disposed on at least part of the resin part (29a, 29b, 21, 304).

**6.** The air conditioner (1) as recited in claim 5, wherein the resin part is an impeller (21) for supplying the air into the room.

**7.** The air conditioner (1) as recited in claim 5 or 6, further comprising a cooling part (20) for cooling the air, wherein the resin part is a drain pan (29a, 29b) that receives water condensed by the cooling part (20).

**8.** The air conditioner (301) as recited in any of claims 5 to 7, wherein the resin part is a humidifying unit (304) that humidifies the air.

**9.** The air conditioner (1, 301) as recited in any of claims 1 to 8, wherein the apatite that includes a photocatalytic function is distributed in the resin part (24, 29a, 29b, 21, 251, 252, 253, 304, 307).

**10.** The air conditioner (1,301) as recited in any of claims 1 to 9, wherein the portion of the resin part (24, 29a, 29b, 21. 251, 252, 253, 304, 307) where the apatite that includes the photocatalytic function is disposed is surface-roughened.

**11.** An air distribution path forming member that forms an air distribution path for distributing air into a room, wherein the air distribution path forming member is molded from resin and comprises an apatite that includes a photocatalytic function and is disposed so as to contact the air flowing in the air distribution path.

**12.** An air distribution path forming member that forms an air distribution path for distributing air into a room, the air distribution path forming member comprising:

a resin layer disposed so as to cover at least part of the air distribution path; and
an apatite that includes a photocatalytic function and is disposed on at least part of the resin layer.

## Fig. 1

Fig. 2

# Fig. 3

*Fig. 4*

Fig. 5

*Fig. 6*

EP 1 752 714 A1

*Fig. 7*

# Fig. 8

OXIDATIVE DECOMPOSITION EFFICIENCY
WITH RESPECT TO ACETALDEHYDE
(SAME SURFACE AREA)

*Fig. 9*

EP 1 752 714 A1

## INTERNATIONAL SEARCH REPORT

| | International application No. |
|---|---|
| | PCT/JP2005/006651 |

**A. CLASSIFICATION OF SUBJECT MATTER**
Int.Cl$^7$ F24F1/00, 1/02, 6/00

According to International Patent Classification (IPC) or to both national classification and IPC

**B. FIELDS SEARCHED**

Minimum documentation searched (classification system followed by classification symbols)
Int.Cl$^7$ F24F1/00, 1/02, 6/00

Documentation searched other than minimum documentation to the extent that such documents are included in the fields searched

| Jitsuyo Shinan Koho | 1922-1996 | Jitsuyo Shinan Toroku Koho | 1996-2005 |
|---|---|---|---|
| Kokai Jitsuyo Shinan Koho | 1971-2005 | Toroku Jitsuyo Shinan Koho | 1994-2005 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | JP 9-196399 A (Toshiba Corp.), 29 July, 1997 (29.07.97), Par. No. [0030]; Fig. 1 (Family: none) | 1-12 |
| Y | JP 2000-327315 A (Fujitsu Ltd.), 28 November, 2000 (28.11.00), Par. Nos. [0011] to [0024] (Family: none) | 1-12 |
| Y | 17 July, 2003 (17.07.03), Nihon Keizai Shimbun, Chakan, page 15 | 1-12 |
| Y | JP 2001-324195 A (Daikin Industries, Ltd.), 22 November, 2001 (22.11.01), Par. No. [0003] (Family: none) | 7 |

| ☒ | Further documents are listed in the continuation of Box C. | ☐ | See patent family annex. |
|---|---|---|---|

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| 10 June, 2005 (10.06.05) | 05 July, 2005 (05.07.05) |

| Name and mailing address of the ISA/ | Authorized officer |
|---|---|
| Japanese Patent Office | |
| Facsimile No. | Telephone No. |

Form PCT/ISA/210 (second sheet) (January 2004)

**INTERNATIONAL SEARCH REPORT**

| International application No. |
|---|
| PCT/JP2005/006651 |

C (Continuation).    DOCUMENTS CONSIDERED TO BE RELEVANT

| Category* | Citation of document, with indication, where appropriate, of the relevant passages | Relevant to claim No. |
|---|---|---|
| Y | JP 7-316342 A  (Goyo Paper Working Co., Ltd.), 05 December, 1995 (05.12.95), Claim 1 (Family: none) | 9 |
| Y | JP 10-168325 A  (Mitsubishi Chemical Corp.), 23 June, 1998 (23.06.98), Claim 1 (Family: none) | 9 |
| Y | JP 9-940 A  (Toyoda Gosei Co., Ltd.), 07 January, 1997 (07.01.97), Par. No. [0065] (Family: none) | 10 |
| Y | JP 9-309957 A  (Kabushiki Kaisha Aropan), 02 December, 1997 (02.12.97), Claim 1 (Family: none) | 10 |

Form PCT/ISA/210 (continuation of second sheet) (January 2004)

**EP 1 752 714 A1**

**REFERENCES CITED IN THE DESCRIPTION**

**Patent documents cited in the description**

- JP 9196399 A